# EUROPEAN PATENT SPECIFICATION

(11) **EP 0 581 150 B1**
(45) Date of publication and mention of the grant of the patent: **21.10.1998**
(21) Application number: 93111471.4
(22) Date of filing: 16.07.1993
(51) Int. Cl.: C08G 77/442, C08L 83/10, G03G 9/087, C08G 77/42, C08F 8/00

(54) **Releasing agents and resin compositions therewith**
Trennmittel und diese enthaltende Harzzusammensetzungen
Agents anti-adhésifs et compositions de résines les contenant

(30) Priority: 17.07.1992 JP 213494/92
(43) Date of publication of application: 02.02.1994
(73) Proprietor: SANYO CHEMICAL INDUSTRIES, Higashiyama-ku, Kyoto 605 (JP)
(72) Inventor: Suwada, Ataru, Fushimi-ku, Kyoto (JP)
(74) Representative: WILHELMS, KILIAN & PARTNER Patentanwälte

(56) References cited:
- EP-A- 0 029 566
- EP-A- 0 171 167
- EP-A- 0 298 279
- EP-A- 0 321 619
- EP-A- 0 357 215
- EP-A- 0 413 604
- EP-A- 0 421 416
- GB-A- 2 234 602
- DATABASE WPI Derwent Publications Ltd., London, GB; AN 85-319876 & JP-A-60 222 864 (KONISHIROKU) 7 November 1985

## Description

The present invention relates to a releasing agent and a resin composition therewith. More particularly, it relates to a releasing agent and a resin composition therewith suitable for an electrophotographic toner. Further more particularly, it relates to a releasing agent providing an negative charge with a toner and a resin composition therewith.

In electrophotographic or electrostatic recording system, a known releasing agent, as Japanese patent publication No. 3304/1977 discloses, is a low molecular weight polypropylene. However, conventional low molecular weight polyolefin does not satisfy demand for lowering of a fixing temperature which is rising in recent years, because it melts or softens at high temperature. In order to improve a toner in a fixing property at low temperature and anti-offsetting, Japanese patent Lay-open No.282751/1985 discloses an ethylenically unsaturated silane grafted wax and also British patent publication No.2234602 discloses a specific polyolefin modified with an organic silane compound having an amino group, for the releasing agent both of which provides a positive charge with a toner.

Attempt to permit the low molecular weight polypropylene to melt at lower temperature leads to failure because the modified polypropylene provides a toner with poor flowability. Natural waxes having a low melting point, synthetic waxes such as polyethylene wax and unsaturated carboxylic acid modified waxes decrease a releasing property or flowability of a toner and easily cause to cohere the toner. Ethylenically unsaturated silane grafted polyethylene waxes are unfit for wide-spread duplicators in which a latent image is developed with a toner with an egative charge, because a relatively great amount of a charge control agent is needed. Some of conventional releasing agents has poor compatibility with binder resins or charge control agents, resulted in inferiorly dispersed state or bleeding of the former agents, in worse case. Such phenomena often hinder stability of the toners in performances.

Accordingly, an object of the present invention provides a releasing agent to enable a toner to fix at lower temperature. Another object of the present provides a releasing agent to improve hot-offsetting property of a toner. An further object of the present invention provides a releasing agent which is able to melt or soften at lower temperature and impedes no flowability of a toner. An still further object of the invention provides a releasing agent compatible with binder resins or charge control agents. Further, an object of the invention provides a releasing agent easily and minutely dispersible in a polyester resin. Still further, an object of the invention provides a releasing agent to impart a toner with a negative chargeability. Moreover, an object of the invention provides a binder resin composition containing the releasing agent to bring a fixing property at lower temperature, a good anti-hot offsetting property, a negative chargeability or a good releasing property into a toner.

The releasing agent which is applied to the toner for electrophotographiy according to the present invention essentially consisting of:
a releasing agent obtained by reacting an organic polysiloxan having at least one hydroxyl group or at least one epoxy group with an ethylenically unsaturated dicarboxylic acid grafted polyolefin or olefin copolymer or with a reaction product of that grafted polyolefin or olefin copolymer and an active hydrogen atom-containing compound selected from the group consisting of an alcohol, an amine and an aminoal-cobol, said releasing agent containing 0,1 to 5 % by weight of the silicone atom in the molecule.

Suitable polyolefin according to the present invention includes polyethylene of high density, medium density or low density types, polypropylene, polybutene, poly-4-methylpentene-1 and a combination thereof.

Suitable olefin copolymer includes ethylene copolymers, such as ethylene-alphaolefin copolymers, ethylene-vinyl acetate copolymers and ethylene-methacryl or acrylic acid copolymers, propylene copolymers, such as propylene-alpha-olefin copolymers, propylene-vinyl acetate copolymers and propylene-methacryl or acrylic acid copolymers and combinations thereof.

A number average molecular weight of the polyolefin is usually 500 to 100,000, preferably 1,000 to 20,000. The Preferred polyolefin is a low molecular weight polyolefin obtained by thermal degradation of high molecular weight polyolefin. A low molecular weight polyethylene is particularly preferred to produce a low melting-point releasing agent. Such polyethylene has a number average molecular weight of 1,000 to 20,000.

Suitable ethylenically unsaturated dicarboxylic acid includes maleic acid, fumaric acid, itaconic acid, citraconic acid and anhydride thereof. Among these, maleic anhydride is preferred.

An addition amount of the dicarboxylic acid to the polyolefin is usually 0.5 to 30 % by weight, preferably 1 to 20 % by weight, based on the resultant modified polyolefin.

Suitable alcohols include a monohydric alcohol such as methanol, ethanol propanol, butanol, pentanol, hexanol, octanol, oleyl alcohol and stearyl alcohol, a polyhydric alcohol such as ethylene glycol, diethylene glycol, 1,4-butanediol , bis-hydroxyethoxy benzene, glycerin and pentaerythrytol.

Suitable amines having carbon atoms of 1 to 18 include monoamine such as dimethylamine, diethylamine, propylamine, laurylamine and stearylamine, diamines such as ethylenediamine, 1,4-butylenediamine, cyclohexanediamine, tolylenediamine and isophoronediamine and triamines such as diethylenetriamine.

Suitable aminoalcohols include monoethanolamine, diethanolamine, N-methylethanolamine, N,N-dimethylethanolamine, N,N-diethylethanolamine and N,N-dimethylpropanolamine.

Ethylenically unsaturated dicarboxylic acid grafted polyolefin is obtained by graft reacting the polyolefin with the dicarboxylic acid in a solution or melted state at 120 to 180°C for 0.5 to 10 hours in the presence of an organic peroxide, if needed. The grafted polyolefin is also obtained by reacting the polyolefin with an ester, amide or imide of the dicarboxylic acid in a solution or melted state at 120 to 180°C for 0.5 to 10 hours in the presence of an organic peroxide, if needed, followed by hydrolysis of the obtained reaction product. Derivatives of such acid are, for example, methyl maleate, dibutyl maleate, maleinmonoamide and maleinimide.

A reaction product according to the present invention is obtained by reacting the acid grafted polyolefin with 0.1 to 3 moles of, preferably 0.4 to 2.2 moles of an active hydrogen atom-containing compound per one mole of the dicarboxylic acid in the grafted polyolefin, at 60 to 240°C for 0.5 to 20 hours, in the presence of a catalyst and a solvent if needed. When excess amount of the compound is employed, the unreacted compound is preferred to be removed by reduced pressure or solvent extraction, from the resutant product. Suitable catalysts used for the above reaction are oxides, hydroxides, or carbonates of metals and tertiary amines. The reaction product is also obtained by an ester exchange reaction of the grafted polyolefin and an ester of the alcohol as a substitute of the alcohol. Therefore, the active hydrogen atom-containing compound includes a masked compound which has the same reaction behavior toward a carboxylic acid as an alcohol or amine, e.g., an ester, an amide and an imide.

According to the present invention, the reaction product of the ethylenically unsaturated dicarboxylic acid grafted polyolefin and the active hydrogen atom-containing compound is preferred to leave a carboxylic group resulting from the dicarboxylic acid in the molecule.

The polysiloxanes according to the present invention may be oily or resinous. Structure of the polysiloxanes is typically expressed by the following formulae: 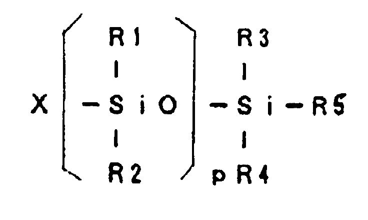 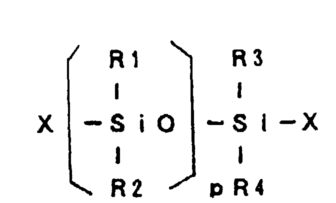 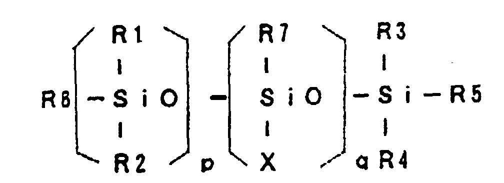 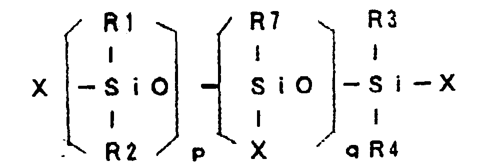 wherein:
each of R1 to R7 is independently the same or different and is a monovalent group such as methyl, propyl, dodecyl, phenyl, *β*-phenylethyl or 3,3,3-trifluoropropyl,
X is a monovalent group including an epoxy group such as glycidyl, glycidyloxyalkyl or 3,4-oxocyclohexylalkyl or a hydroxyl group such as hydroxypropyl, hydroxyisobutyl, hydroxyphenethyl, hydroxyethylpolyoxyethylenealkyl or hydroxypropylpolyoxypropylenealkyl, and
p and q are each independently 0, or an integer greater than 1, provided that the sum of p and q is an integer of from 10 to 1,000.

Suitable polysiloxanes includes poly(dimethylsiloxane, methylhydroxyethoxypropylsiloxane), poly(dimethylsiloxane, methylgycidyloxypropylsiloxane) and poly(dimethylsiloxane, methyl3,4-oxocyclohexylethylsiloxane).

Such polysiloxanes having at least one hydroxyl group are marketed under the tradenames of " X-22-160AS " ( hydroxyl value:112 ), " KF-6001" ( hydroxyl value:62 ), " KF-6002 " ( hydroxyl value:35 ), " KF-6003 " ( hydroxyl value:96 ) , " KF851 ", " X-22-801 ", available from Shinetsu Kagaku Kabushikikaisha in Japan and " F-235-21 " " FZ-3722 ", " FZ-3711 ", " F-235-22 ", " F-235-71 ", " F-235-72 "," F-235-73 ", " F-235-74 ", " F-235-75 ", " FZ-3748 ", " FZ-3749 ", available from Nihon Unicar company in Japan.

Such polysiloxanes having at least one epoxy group are marketed under the tradenames of " KF100T ", " KF101 " ( epoxy equivalent:340 ), " KF102 " ( epoxy equivalent:4,000 ), " KF103 ", " X-60-164 ", " X-22-343 ", " X-22-367 ", " X-22-163AS " ( epoxy equivalent:490 ), " X-22-163A " ( epoxy equivalent:950 ), " X-22-163B " ( epoxy equivalent:176O ), " X-22-163C " ( epoxy equivalent:2790), " X-22-163E " ( epoxy equivalent:4,000 ), " X-22-163F " ( epoxy equivalent: 6,100 ), " X-22-169A " ( epoxy equivalent:980), " X-22-169B " ( epoxy equivalent:1,670 ), available from Shinetsu Kagaku Kabushikikaisha in Japan and " L-9300 ", "FZ-3720 ", "F-217-31", " F-217-32", "F-239-41 ", " F-239-42", " F-239-43 ", "F-217-41", "F-217-42 ", FZ-3736 ", "F-238-51", " F-239-52 ", "F-239-53 ", available from Nihon Unicar company in Japan.

Among these, preferred is a polysiloxane having an epoxy group, more preferred is a polysiloxane having an epoxy equivalent of 200 to 10,000.

The reaction of the ethylenically unsaturated dicarboxylic acid grafted polyolefin or the reaction product of the grafted polyolefin and the active hydrogen atom-containing compound with the polysiloxane having the hydroxyl or epoxy groups, according to the present invention, is conducted in equivalent ratio of the carboxylic group to the hydroxyl or epoxy groups of 0.5 to 2 at 80 to 260°C for 0.5 to 16 hours, in the presence of a catalyst if needed, releasing agents contain 0.01 to 5 % by weight of silicone atom in the molecule. When the releasing agent does not contain more than 0.01 % by weight of the atom, it provides the toner with insufficient amount of electrostatic charge. When it does not contain less than 5 % by weight of the atom, there are some undesirable problems such as difficut production of the agent and insufficientlyimproved anti-hot offsetting property.

Particularly preferred releasing agents are obtained by reacting the polyolefin which is produced by thermal degradation, results in having a number average molecular weight of 1,000 to 20,000 and maleic anhydride grafts on with the monohydric alcohol having carbon atoms of 1 to 18 and further reacting the resultant half ester with the polysiloxane having the epoxy equivalent of 200 to 10,000.

Suitable binder resins according to the present invention include polyolefin, polyurethane, polyamide, poly(vinyl butyral), poly(vinyl acetate), polyvinylchloride, rosin, terpene resin, phenolic resin, petroleum resin, homo- or co-polymers of sterenic monomer, polymer of acrylate ester, polyester resin and epoxy resin.

Suitable polyolefin includes polyethylene,

Suitable homopolymers of styrenic monomer include polystyrene and polyvinyltoluene. Suitable copolymers of styrenic monomer include styrene-substituted styrene copolymer such as styrene-p-chlorostyrene, styrene-vinyltoluene and styrene-ethylenically unsaturated ester copolymers such as styrene-methyl acrylate, styrene-ethyl acrylate, styrene-butyl acrylate, styrene -octyl acrylate, styrene-butyl methacrylate, styrene-maleate ester or styrene-fumarate ester copolymers, styrene-diene copolymers such as styrene-butadiene copolymer. Copolymers of styrenic monomer may include a cross-linked copolymer comprising the above monomer and a cross-linkable monomer.

Polyester resin may be linear or non-linear. Suitable polyester resin include one comprising a polyhydric alcohol such as ethylene glycol, diethylene glycol, butanediol, neopentyl glycol, p-xylylene glycol, cyclohexanediol, cyclohexanedimethanol, glycerin, pentaerythrytol or alkylene oxide ( e.g., ethyleneoxide, propyleneoxide ) adducts of bisphenol A or phenolic resin ( having a nucleus number of 3 to 20 ) and a polycarboxylic acid such as fumaric acid, maleic acid, succinic acid, adipic acid, suberic acid, azeraic acid, sebacic acid, terephthalic acid, isophthalic acid, 2,6-naphthalene-dicarboxylic acid, trimellitic acid, pyromellitic acid, hemimellitic acid, trimesic acid or 4-neopentylidenyl-1,2,6,7-heptanetetracarboxylic acid.

Homo- or copolymer of styrenic monomer and polyester resin are preferred. A polymer composition comprising a polymer of a vinyl monomer selected from the group consisting of an acrylate ester, a methacrylate ester, styrene, fumarate mono- or diester, acrylonitrile, methacrylic acid and methacrylamide, said polymer having a number average molecular weight of 2,000 to 15,000, a z average molecular weight of at least 400,000 and a ratio of z average molecular weight to a number average molecular weight of 50 to 600, a polyestery resin comprising a polycarboxylic acid and an alkylene oxide adduct of a phenolic resin, and a polyester resin comprising a polycarboxylic acid comprising trimellitic acid and an alkylene oxide adduct of bisphenol A are more preferred.

The above vinyl polymer having the z average molecular weight of at least 400,000 is obtained by polymerizing the above monomer in the presence or absence of mono-peroxide as a polymerization initiator at relatively low temperature and then further continuing to polymerize the monomer with use of the solvent and the above initiator when they are absent. It is preferred that bulk polymerization is conducted until 30 to 90 % by weight of the monomer used is consumed based on the total monomer. The preferred temperature through the total reaction ranges from 80 to 150°C.

Such polymer is also obtained by polymerizing the monomer at higher temperature with use of a poly-peroxide in place of the mono-peroxide. It enable to produce the polymer in the polymerization of various types, including bulk polymerization, solution polymerization, dispersion polymerization and emulsion polymerization. When the poly-peroxide is used, higher molecular weight polymer can be produced in shorter process time.

Suitable poly-peroxides are 1,1-di-t-butylperoxy-3,3,5-trimethylcyclohexane, 1,3-bis-(t-butylperoxyisopropyl) benzene, 2,5-dimethyl-2,5-di-(t-butylperoxy) hexane, 2,5-dimethyl-2,5-di-(t-butylperoxy) hexyne-3, tris-(t-butylperoxy) triazine, 1,1-di-t-butylperoxyclclohexane, 2,2-di-t-butylperoxy butane, n-butyl 4,4-di-t-butylperoxyvalerate, di-t-butylperoxy hexahydroterephthalate, di-t-butylperoxy azerate, di-t-butylperoxytrimethyl adipate, 2,2-bis-(4,4-di-t-butylperoxycyclohexyl) propane and 2,2-t-butylperoxy octane.

Among these, 1,1-di-t-butylperoxy-3,3,5-trimethylcyclohexane, 1,1-di-t-butylperoxycycloxane, di-t-butylperoxy hexahydroterephthalate, di-t-butylperoxy azerate and 2,2-bis-(4,4-di-t-butylperoxycyclohexyl) propane are preferred.

A resin composition of the present invention can be obtained by dissolving or dispersing usually 0.5 to 30 % by weight of, preferably 0.5 to 10 % by weight of, more preferably 1 to 5 % by weight of the releasing agent of the present invention in usually 70 to 99.5 % by weight, preferably 90 to 99.5 % by weight of, more preferably 95 to 99 % by weight of the binder resin which is in solution followed by removing the solvent or by mixing both components in melted state. Still, the composition can be obtained by an addition polymerization of the above vinyl monomer or condensation polymerization of a combination of the polyhydric alcohol and the polycarboxylic acid previously mentioned, in the presence of the releasing agent of the present invention. In the above condensation polymerization, a lower alkyl ester of the polycarboxylic acid is more preferred than the acid.

A toner or developer for electrophotography can be prepared by kneading the resin composition of the present invention with a coloring agent, a charge control agent and a magnetic powder or a carrier particle if needed, pulverizing these auxiliaries until their desired particle size distribution attains and mixing the resutant powder with hydrophobic colloidal silica powder. Such coloring agent is, for example, carbon, iron black, benzidine yellow, quinacridone, Rhodamine D and phthalocyanines. Such charge control agent is, for example, Bontron E-82, Bontron S-34 ( available from Orient company in Japan ) and Spiron Black TRH ( available from Hodogaya Kagaku Company in Japan ). Such magnetic powder is, for example, powders of iron, cobalt, nickel or magnetite and ferrite. Such carrier particle is, for example, glass beads.

The present invention is explained in further detail with the aid of the following, non-limiting embodiment examples. The parts and percentages, also otherwise illustrated are all by weight.

### EXAMPLE

1.Releasing property
   Releasing property is evaluated in view of anti-offsetting property and filming property in a developer comprising a releasing agent, a binder resin, a coloring agent, a charge control agent, a colloidal silica and a carrier.
2.Anti-hot offsetting property
   An unfixed toner image is developed on a plain paper using a commercially available duplicator ( Model BD-7720, produced by Toshiba Corporation in Japan ) and the image on the paper is fixed at the speed of 35 copies of A4 sheet per minute using a commercially available duplicator ( Model SF-8400A, produced by Sharp Corporation in Japan ) revised to provide with a variable fixing device. In this way, the temperature of a heat roll to initiate off-setting phenomenum is measured.
3.Filming property
   It is observed with bared eyes whether a toner is fused and smeared on a photosensitive drum post continuous 30,000 copies.
4.Flowability
   Flowability is evaluated in view of the bulk specific gravity. The higher the bulk specific gravity is, the higher the flowability is. Bulk specific gravity of a mixture of the resin composition containing a releasing agent and a carrier ( Carrier F-150 ) is measured by means of a powder tester available from Hosokawa Micron Kabushikikaisha in Japan
7.Chargeability
   The resin composition of the present invention and the carrier ( available from Nihon Teppun Kabushikikaisha in Japan under the trademark of Carrier F-150 ) in a 100ml bottle are frictionized in a tumbler shaker mixer at a speed of 50r.p.m. to make it charged. Every predetermined time, a charging quantity of the mixture is measured in atomosphere of 23°C and 50% relative humidity by means of a blow-off electrostatic charge meter available from Toshiba corporation in Japan.
8.Melting point
   Melting point of a releasing agent is measured at the rise of 10°C per minute by means of a melting point apparatus ( Model RDC220, available from Seiko Denshikougyou Kabushikikaisha in Japan ). A maximum peak on a chart is regarded as a melting point.
9.Minimum fixable temperature
   A developer is prepared by mixing 30 parts a toner ( comprsing a releasing agent, a binder resin, a coloring agent, a charge control agent and a colloidal silica ) and 720 parts of a ferrite carrier F-100.
   An unfixed toner image is visualized with the above developer on a plain paper using a commercially available duplicator ( Model BD-7720, produced by Toshiba Corporation in Japan ) and the image on the paper is fixed at the established delivery speed of 150mm per second using a commercially available duplicator ( Model SF-8400A, produced by Sharp Corporation in Japan ) revised to provide with a variable fixing device. In this way, a minimum temperature to enable fixation is measured.
9.Preparation of binder resin
9-1.Preparation of high molecular weight polymer
   A mixture of 480 parts of styrene, 120 parts of n-butyl acrylate, 0.1 parts of 1,6-hexane diacrylate and 0.3 parts of 2,2-bis-(4,4-di-t-butyl-peroxycyclohexyl) propane is polymerized in the atmosphere of nitogen at 95°C for 3 hours, followed by adding 150 parts of xylene, polymerizing at the above temperature for additional 4 hours and further continuing polymerization at 120°C for 2 hours. After supplying a resultant polymer with additional 0.6 parts of the peroxide, the polymerization was completed by rising the mixed solution to 160°C over 2 hours and keeping the temperature for one hour.
9-2.Preparation of low molecular weight polymer
   An one liter glass autoclave is feeded with three hundered parts of xylene, filled with nitrogen gas and rised to 200°C. After dropping a mixture of 630 parts of styrene, 73 parts of n-butyl acrylate and 8 parts of di-t-butylperoxide over 3 hours, polymerization was completed by heating the resultant solution at the same temperature. A polymer thus obtained has a number average molecular weight of 6,000 and ratio of a weight average molecular weight to a number average molecular weight of 2.3. Contents of the polymer within the region between 1,000 and 30,000 in molecular weight occupied 91 % in area on a GPC chart.
9-3.Preparation of binder resin composition
   A binder resin composition was obtained by heating a mixture of 1,000 parts of the above high molecular weight polymer solution and 750 parts of the above low molecular weight polymer solution to be homogeneous under refluxing and distilling off the solvent under reduced pressure.
   The composition has a weight average molecular weight of 300,000, ratio of a weight average molecular weight to a number average molecular weight of 66, and a glass transition temperature of 59°C. Respective contents of the polymer of at least 300,000 and the polymer within the region between 1,000 and 30,000 in molecular weights occupied 28 % and 47 % in area on a GPC chart. A molecular weight of 35,000 was located at the bottom and its height from the base line occupied 13 % of the height of top peak, on the GPC chart.

### Example 1

Nine hundred parts of low molecular weight polypropylene having a number average molecular weight of 2,300 and a melt viscosity of 0.7 poise at 160°C and 100 parts of maleic anhydride were mixed and heated in 1,500 parts of xylene to disperse homogeneously. After adding 10 parts of dicumyl peroxide to the resultant solution, the mixture was reacted at a temperature of 95 to 110°C for 4 hours and then xylene was distilled off. Polypropylene maleated in amount of 5.0% by weight thus obtained has an acid value of 60. Nextly, 100 parts of maleated polypropylene and 3 parts of a hydroxyl group-containing polysiloxane, KF151 ( available from Shinetsu Kagaku Company in Japan ) were mixed in 150 parts of xylene and reacted at 140°C for 2 hours. After distlling off xylene, a releasing agent thus obtained melted at 99°C.

### Example 2

Four hundreds of maleated polypropylene of Example 1 and 80 partes of lauryl alcohol were reacted in the presence of 1 parts of sodium hydroxide at 180 to 215°C for 10 hours. The reaction product was obtained by distilling off xylene and unreacted alcohol and had an acid value of 22. It was reacted with 16 parts of an epoxy group-containing polysiloxane, KF101 ( available from the above company ) at 190 to 195°C for 5 hours. A releasing agent having the acid value of 9 was thus obtained. The agent melted at 126°C.

### Example 3

Four hundreds of maleated product of thermal degradated polyethylene, Youmex 2000( available from Sanyo Chemical Industries, Ltd in Japan ) was reacted with 25 parts of methanol at 95 to 110°C in the presence of 1 parts of sodium hydroxide for 5 hours. After distilling off unreacted alcohol and xylene, a half ester having the acid number of 29 was thus obtained. This ester was reacted with polysiloxane, KF101 ( epoxy equivalent:340 ) at 170 to 190°C for 6 hours. A releasing agent thus obtained had the acid number of 12 and a melting point of 100°C.

### Example 4

A mixture of 400 parts of maleated polyethylene of Example 3, 400 parts of stearyl alcohol and one parts of sodium hydroxide was heated at 200 to 230°C for 6 hours and then unreacted alcohol was distilled off. The resultant reaction product was further reacted with 16 parts of an epoxy group-containing polysiloxane, KF102 ( available from the above company ) at 190 to 210°C for 5 hours. A releasing agent having the acid value of 5 and the melting point of 102°C was thus obtained

### Example 5

A solution of 400 parts of maleated polyethylene of Example 3, 19 parts of N,N-dimethylethanolamine in 600 parts of xylene was heated at 190 to 210°C for 4 hours and then unreacted alcohol and xylene was distilled off. The resultant reaction product had an amine value of 26. The product was further reacted with 12 parts of polysiloxane, KF101 at 190 to 210°C for 5 hours. A releasing agent having the melting point of 104°C was thus obtained.

### Example 6

Eighty seven parts of a binder resin composition previously mentioned was kneaded with 4 parts of a releasing agent of Example 1, 8 parts of carbon black, MA-100 ( available from Mitsubishi Kasei kougyou Kabushiki Kaisha in Japan ) and one part of Spironblack TRH (charge control agent, available from Hodogaya Kagaku company in Japan ) under the conditions of 140°C and 30r.p.m. for 10 minutes in Labo-plastmill ( available from Toyo Seiki Company in Japan )

The kneaded product is finely pulverized by means of Jetmill ( model PJM 100, available from Nihon Pneumatic Company in Japan ), sieved to get a fine powder with 2 microns or below by means of an airborne classifyer ( model MSD, available from Nihon Pneumatic Company in Japan ). A toner was prepared by enoughly mixing one thousand parts of the powder with 3 parts of Aerosil R972 ( available from Nihon Aerosil company ). A developer was obtained by enoughly mixing 25 parts of the above toner with 1,000 parts of a powder of iron ( produced under the trademark of F-150 by Nihon Teppun company )

The anti-hot offsetting property and filming property were evaluated for the developer thus obtained, as shown in Table 1.

### Examples 7 to 10 and Comparative Example 1 to 3

In the same manner as Example 6 except for using each releasing agent of Examples 2 to 5, commercially available paraffin wax, Viscol 550P ( low molecular weight polypropylene having a melting point of 140°C, available from Sanyo Chemical Industries, Ltd ) or Sanwax 151P (low molecular weight polyethylene having a melting point of 103°C, available from the above company each developer was prepared.

The anti-offsetting property and filming property were evaluated for these developers, as shown in Table 1.

**Table 1**

| Example | Anti-offsetting | Filming |
|---|---|---|
| 6 | over 220°C | not occured |
| 7 | do. | do. |
| 8 | do. | do. |
| 9 | do. | do. |
| 10 | do. | do. |

| Comparative example | | |
|---|---|---|
| 1 | 140°C | greatly fused and smeared |
| 2 | 205°C | fairly fused and smeared |
| 3 | 180°C | greatly fused and smeared |

### Examples 11 to 12 and Comparative Examples 4 to 5

One hundred parts of the binder resin composition previously mentioned was kneaded with 4 parts of the releasing agent of Examples 1 or 3, or of Comparative Examples 1 or 2 at 150 to 155°C at the speed of 70 r.p.m. for 20 minutes by means of the Labo plastmill.

The resin composition of the present invention is prepared by finely pulverizing the kneaded product by means of Jetmill previously mentioned and sieving the resultant powder to get a fine powder with 2 microns or below by means of the airborne classifyer.

Bulk specific gravity of these powders is shown in Table 2.

**Tabale 2**

| | Bulk specific gravity | releasing agent ( melting point) |
|---|---|---|
| Example 11 | 0.24 | Example 1 ( 99°C ) |
| Example 12 | 0.25 | Example 3 (100°C ) |
| Comparative Example 4 | 0.22 | Comparative Example 1 ( 70°C ) |
| Cmparative Example 5 | 0.23 | Comparative Example 2 ( 140°C ) |

### Examples 13 and 14 and Comparative Examples 6 and 7

Four parts of the corresponding toner used in Examples 7 and 8 and Comparative Examples 2 and 3 and a carrier tradmarked F-150 were mixed and charged. Charging quantity of Respective mixture while changing a mixing time of from 1 to 60 minutes at shown intervals is evaluated, as shown in Tabale 3.

**Table 3**

| | Friction time ( minutes ) | Amount of charge ( µC/g ) |
|---|---|---|
| Example 13 | 1.0 | -5.6 |
| | 3.0 | -11.8 |
| | 20.0 | -30.5 |
| | 60.0 | -44.4 |
| Example 14 | 1.0 | -3.7 |
| | 3.0 | -7.9 |
| | 20.0 | -23.0 |
| | 60.0 | -35.0 |
| Comparative Example 6 | 1.0 | -0.1 |
| | 3.0 | -0.3 |
| | 20.0 | -2.3 |
| | 60.0 | -6.4 |
| Comparative Example 7 | 1.0 | -0.1 |
| | 3.0 | -0.2 |
| | 20.0 | -2.1 |
| | 60.0 | -5.0 |

### Example 15

A mixture of 75 parts of xylene and 3.5 parts of the releasing agent of Example 2 was heated to the reflux temperature. A mixture of 69 parts of styrene , 24 parts of n-butyl acrylate, 6 parts of monobutyl maleate, 1.4 parts of divinylbenzene and 1.0 parts of di-t-butylperoxide was dropwise added to the xylene solution and polymerized for 4 hours. After removing the solvent, a resin composition having a glass transition temperature of 57°C and a melt index of 2.1 was obtained. The releasing agent is uniformly dispersed in the composition microscopically. A developer prepared by the same manner as Example 6 was evaluated. The result is shown in Tabale 4.

### Example 16

One thousand two hundreds forty parts of a polyester resin was obtained by polycondensation of 318 parts of isophthalic acid with 1,000 parts of adduct of 3 moles of propylene oxide to Bisphenol A. The resin had a number average molecular weight of 2,500, a weight average molecular weight of 5,000, a glass transition temperature of 36°C, a melt viscosity of 50,000 poise at 75°C, an acid value of 1.0 and a hydroxyl value of 51.

A developer was prepared by mixing the resin with a releasing agent of Example 2 in the same manner as Example 6.

Anti-offsetting, fixability and releasing property were evaluated on the developer, as shown in Tabale 4.

### Example 17

Into an autoclave, 455 parts of novolak A was placed, and an inlet air was substituted with nitrogen. Next, 1.5 parts of triethylamine was added thereto, rising a temperature to 120°C and 261 parts of propylene oxide was supplied and reacted. Propylene oxide adduct of phenolic resin was thus prepared by removing volatile substance. Sixty parts of the adduct, 940 parts of adduct of 3.1 moles of propylene oxide to 2,2-bis ( 4-hydroxyphenyl ) propane and 376 parts of terephthalic acid were reacted at 230°C in the presence of 3.5 parts of dibutyl tin oxide under nitrogen stream. After cooling to 200°C, the reaction was continued under reduced pressure. A polyester resin having an acid value of 3.0, a glass transition temperature of 60°C and a melting point of 118°C was thus obtained.

A developer was prepared by mixing the resin with a releasing agent of Example 2 in the same manner as Example 6.

Anti-offsetting, fixability and releasing property were evaluated on the developer, as shown in Tabale 4.

### Example 18

Nine hundreds fifty parts of an adduct of 2.3 moles of ethylene oxide to 2,2-bis-4-hydroxyphenyl propane ( hydroxyl value:315 ) and 434 parts of terephthalic acid were condensed at 230°C until an acid value reached 1.5. After cooling to 190°C, 100 parts of trimellitic acid was added and continued to react. A polyester resin having an acid value of 21, a glass transition temperature of 64°C and a softening point of 143°C was thus obtained.

A developer was prepared by mixing the resin with a releasing agent of Example 2 in the same manner as Example 6.

Anti-offsetting, fixability and releasing property were evaluated on the developer, as shown in Tabale 4.

### Comparative Example 8

In the same manner as Example 6 except for using a polyester resin of Example 16 and Viscol 550P, a developer was prapared.

Anti-offsetting, fixability and releasing property were evaluated on the developer, as shown in Tabale 4.

**Table 4**

| | Example 15 | Example 16 | Example 17 | Example 18 | Comparative Example 8 |
|---|---|---|---|---|---|
| Offset initiating temperature (°C) | over 220 | 220 | over 220 | over 220 | 180 |
| Minimum fixable temperature (°C) | 140 | 152 | 139 | 167 | 155 |
| Releasing property | good | good | good | good | poor |

## Claims

1. A releasing agent obtained by reacting an organic polysiloxane having at least one hydroxyl group or at least one epoxy group with an ethylenically unsaturated dicarboxylic acid grafted polyolefin or olefin copolymer or with a reaction product of that grafted polyolefin or olefin copolymer and an active hydrogen atom-containing compound selected from the group consisting of an alcohol, an amine and an aminoalcohol, said releasing agent containing 0,1 to 5 % by weight of the silicone atom in the molecule.

2. The releasing agent according to claim 1, wherein the polyolefin respectively olefin copolymer is a (co)polymer of ethylene.

3. The releasing agent according to claim 1 or 2, wherein the polyolefin respectively olefin copolymer has a number average molecular weight of 500 to 100.000.

4. The releasing agent according to 1, 2 or 3, wherein the polyolefin respectively olefin copolymer has a number average molecular weight of 1.000 to 20.000.

5. The releasing agent according to any one of claims 1-4, wherein the dicarboxylic acid is maleic anhydride.

6. The releasing agent according to any one of claims 1-5, wherein the active hydrogen atom-containing compound is an aminoalcohol or an monohydric alcohol having 1 to 18 carbon atoms.

7. The releasing agent according to any one of claims 1-6, wherein the polysiloxane has an epoxy equivalent of 200 to 10.000.

8. The releasing agent according to any one of claims 1-7, wherein the reaction product of that grafted polyolefin respectively olefin copolymer and the alcohol is a half ester.

9. A resin composition comprising a releasing agent of any one of claims 1-8 and a binder resin.

10. The resin composition according to claim 9, wherein the binder resin is a vinyl polymer having a number average molecular weight of 2.000 to 15.000, a Z average molecular weight of at least 400.000 and ratio of Z average molecular weight to number average molecular weight of 50 to 600.

11. The resin composition according to claim 9 or 10, wherein the binder resin is a polymer of a styrenic monomer.

12. The resin composition according to claim 9 or 10, wherein the binder resin is a styrene-ethylenically unsaturated ester copolymer, preferably a styrene-acrylate copolymer.

13. The resin composition according to claim 9, wherein the binder resin is a polyester, preferably a polyester comprised of the polycarboxylic acid and an alkylene oxide adduct of a phenolic resin or bisphenol A.

14. The resin composition according to claim 13, wherein the polycarboxylic acid comprises trimellitic acid.

15. The resin composition according to any one of claims 9-14, which is obtainable by dissolving or dispersing the releasing agent into a solvent solution of the binder resin and removing the solvent.

16. The resin composition according to any one of claims 9-12, which is obtainable by polymerizing the monomer to form the binder resin in the presence of the releasing agent.

17. The resin composition according to claim 9, 13 or 14, which is obtainable by condensation polymerization of polyhydric alcohol with polycarboxylic acid to form the binder resin in the presence of the releasing agent.

18. An electrophotographic toner composition, comprising a releasing agent of any one of claims 1-8, a binder resin and a colouring agent.

19. Use of a releasing agent of any one of claims 1-8 for anti-offsetting in electrophotographic toner.

## Patentansprüche

1. Trennmittel, welches durch Umsetzen eines organischen Polysiloxans, welches wenigstens eine Hydroxylgruppe oder wenigstens eine Epoxygruppe aufweist, mit einem ethylenisch ungesättigten, mit einer Dicarbonsäure gepfropften Polyolefin oder Olefincopolymer oder mit einem Reaktionsprodukt des gepfropften Polyolefins oder Olefincopolymeren und einer Verbindung, welche ein aktives Wasserstoffatom enthält, wobei es sich um einen Alkohol, ein Amin und/oder einen Aminoalkohol handelt, erhalten wird, wobei das Trennmittel 0,1 bis 5 Gew. % Siliziumatom im Molekül enthält.

2. Trennmittel gemäß Anspruch 1, wobei das Polyolefin bzw. Olefincopolymer ein Ethylen(co)polymer ist.

3. Trennmittel gemäß Anspruch 1 oder 2, wobei das Polyolefin bzw. Olefincopolymer ein mittleres Molekulargewicht (Zahlenmittel) von 500 bis 100.000 aufweist.

4. Trennmittel gemäß Anspruch 1, 2 oder 3, wobei das Polyoefin bzw. Olefincopolymer ein mittleres Molekulargewicht (Zahlenmittel) von 1.000 bis 20.000 aufweist.

5. Trennmittel nach wenigstens einem der Ansprüche 1 bis 4, wobei die Dicarbonsäure Maleinsäureanhydrid ist.

6. Trennmittel nach wenigstens einem der Ansprüche 1 bis 5, wobei die Verbindung, welche ein aktives Wasserstoffatom enthält, ein Aminoalkohol oder ein einwertiger Alkohol mit 1 bis 18 Kohlenstoffatomen ist.

7. Trennmittel nach wenigstens einem der Ansprüche 1 bis 6, wobei das Polysiloxan ein Epoxyäquivalent von 200 bis 10.000 aufweist.

8. Trennmittel nach wenigstens einem der Ansprüche 1 bis 7, wobei das Reaktionsprodukt des gepfropften Polyolefins bzw. Olefincopolymeren und des Alkohols ein Halbester ist.

9. Harzzusammensetzung, welche ein Trennmittel nach wenigstens einem der Ansprüche 1 bis 8 und ein Binderharz enthält.

10. Harzzusammensetzung gemäß Anspruch 9, wobei das Binderharz ein Vinylpolymer mit einem mittleren Molekulargewicht (Zahlenmittel) von 2.000 bis 15.000, ein mittleres Molekulargewicht (Z-Mittel) von wenigstens 400.000 und ein Verhältnis des mittleren Molekulargewichts (Z-Mittel) zu dem mittleren Molekulargewicht (Zahlenmittel) von 50 bis 600 aufweist.

11. Harzzusammensetzung gemäß Anspruch 9 oder 10, wobei das Binderharz ein Polymer eines styrolischen Monomeren ist.

12. Harzzusammensetzung gemäß Anspruch 9 oder 10, wobei das Binderharz ein Copolymer aus Styrol und einem ethylenisch ungesättigten Ester, bevorzugt ein Styrol/Acrylatcopolymer, ist.

13. Harzzusammensetzung gemäß Anspruch 9, wobei das Binderharz ein Polyester, bevorzugt ein Polyester, aus der Polycarbonsäure und einem Alkylenoxidaddukt eines phenolischen Harzes oder Bisphenol A, ist.

14. Harzzusammensetzung gemäß Anspruch 13, wobei die Polycarbonsäure Trimellithsäure umfaßt.

15. Harzzusammensetzung nach wenigstens einem der Ansprüche 9 bis 14, welche durch Lösen oder Dispergieren des Trennmittels in einer Lösungsmittellösung des Binderharzes und Entfernen des Lösungsmittels erhältlich ist.

16. Harzzusammensetzung nach wenigstens einem der Ansprüche 9 bis 12, welche durch Polymerisieren des Monomeren zur Bildung des Binderharzes in Gegenwart des Trennmittels erhältlich ist.

17. Harzzusammensetzung gemäß Anspruch 9, 13 oder 14, welche durch Kondensationspolymerisieren eines mehrwertigen Alkohols mit einer Polycarbonsäure zur Bildung des Binderharzes in Gegenwart des Trennmittels erhältlich ist.

18. Elektrophotographische Tonerzusammensetzung, welche ein Trennmittel nach wenigstens einem der Ansprüche 1 bis 8, ein Binderharz und ein Färbemittel enthält.

19. Verwendung eines Trennmittels nach wenigstens einem der Ansprüche 1 bis 8 als Anti-Offset-Mittel in elektrophotographischem Toner.

## Revendications

1. Un agent anti-adhésif obtenu en faisant réagir un polysiloxane organique présentant au moins un groupe hydroxyle ou au moins un groupe époxy avec une polyoléfine, ou un copolymère d'oléfine, greffé(e) avec un acide dicarboxylique insaturé sur le plan éthylénique, ou avec un produit de réaction de cette polyoléfine greffée ou de ce copolymère d'oléfine greffé, et un composé contenant un atome d'hydrogène actif sélectionné parmi le groupe composé d'un alcool, d'une amine et d'un amino-alcool, ledit agent anti-adhésif contenant 0,1 à 5 % en masse de l'atome de silicone dans la molécule.

2. L'agent anti-adhésif selon la revendication 1, dans lequel la polyoléfine, respectivement, le copolymère d'oléfine est un (co)polymère d'éthylène.

3. L'agent anti-adhésif selon la revendication 1 ou la revendication 2, dans lequel la polyoléfine, respectivement, le copolymère d'oléfine présente une masse moléculaire moyenne en nombre comprise entre 500 et 100 000.

4. L'agent anti-adhésif selon la revendication 1, 2 ou 3, dans lequel la polyoléfine, respectivement, le copolymère d'oléfine présente une masse moléculaire moyenne en nombre comprise entre 1 000 et 20 000.

5. L'agent anti-adhésif selon l'une quelconque des revendications 1 à 4, dans lequel l'acide dicarboxylique est un anhydride maléique.

6. L'agent anti-adhésif selon l'une quelconque des revendications 1 à 5, dans lequel le composé contenant un atome d'hydrogène actif est un amino-alcool ou un alcool monovalent comportant 1 à 18 atomes de carbone.

7. L'agent anti-adhésif selon l'une quelconque des revendications 1 à 6, dans lequel le polysiloxane présente un équivalent époxy compris entre 200 et 10 000.

8. L'agent anti-adhésif selon l'une quelconque des revendications 1 à 7, dans lequel le produit de réaction de cette polyoléfine greffée, respectivement de ce copolymère d'oléfine greffé, et de l'alcool est un monoester.

9. Une composition de résine contenant un agent anti-adhésif selon l'une quelconque des revendications 1 à 8 et une résine liante.

10. La composition de résine selon la revendication 9, dans laquelle la résine liante est un polymère de vinyle présentant une masse moléculaire moyenne en nombre comprise entre 2 000 et 15 000, une masse moléculaire moyenne Z d'au moins 400 000 et un rapport entre masse moléculaire moyenne Z et masse moléculaire moyenne en nombre compris entre 50 et 600.

11. La composition de résine selon la revendication 9 ou la revendication 10, dans laquelle la résine liante est un polymère d'un monomère styrénique.

12. La composition de résine selon la revendication 9 ou la revendication 10, dans laquelle la résine liante est un copolymère d'ester insaturé sur le plan styrène-éthylénique, de préférence un copolymère styrène-acrylate.

13. La composition de résine selon la revendication 9, dans laquelle la résine liante est un polyester, de préférence un polyester contenant l'acide polycarboxylique et un produit d'addition d'oxyde d'alkylène d'une résine phénolique ou bisphénol B.

14. La composition de résine selon la revendication 13, dans laquelle l'acide polycarboxylique contient de l'acide trimellitique.

15. La composition de résine selon l'une quelconque des revendications 9 à 14, qui peut être obtenue en dissolvant ou en dispersant l'agent anti-adhésif dans une solution de solvant de la résine liante et en éliminant le solvant.

16. La composition de résine selon l'une quelconque des revendications 9 à 12, qui peut être obtenue en polymérisant le monomère pour former la résine liante en présence de l'agent anti-adhésif.

17. La composition de résine selon la revendication 9, 13 ou 14, qui peut être obtenue en polymérisant par condensation l'alcool polyvalent avec de l'acide polycarboxylique pour former la résine liante en présence de l'agent anti-adhésif.

18. Une composition de toner électrophotographique contenant un agent anti-adhésif selon l'une quelconque des revendications 1 à 8, une résine liante et un agent colorant.

19. Utilisation d'un agent anti-adhésif selon l'une quelconque des revendications 1 à 8 pour empêcher le phénomène de maculage dans un toner électrophotographique.
